(19)

Europäisches
Patentamt
European
Patent Office
Office européen
des brevets

(11) **EP 4 407 895 A1**

(12) **EUROPEAN PATENT APPLICATION**

(43) Date of publication:
**31.07.2024   Bulletin 2024/31**

(21) Application number: **23153449.6**

(22) Date of filing: **26.01.2023**

(51) International Patent Classification (IPC):
***H04B 10/61*** (2013.01)

(52) Cooperative Patent Classification (CPC):
**H04B 10/6163**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **MARSELLA, Domenico
20852 Villasanta (IT)**

• **CARNIO, Andrea
20885 Ronco Briantino (IT)**
• **RAZZETTI, Luca Gabriele
20099 Sesto San Giovanni (IT)**
• **COSTANTINI, Carlo
23880 Casatenovo (IT)**
• **GAVIOLI, Giancarlo
20865 Usmate Velate (IT)**

(74) Representative: **Nokia EPO representatives
Nokia Technologies Oy
Karakaari 7
02610 Espoo (FI)**

(54) **PERTURBATION-BASED HARD-DECISION NONLINEARITY COMPENSATION**

(57)    A method and apparatus are provided for compensating incoming signals in a receiver of an optical fiber communication system for degradation due to nonlinear optical effects in the transmission channel. The compensation is performed, *inter alia,* in circuitry **100** to compute perturbation terms that are representative of predicted optical nonlinearity of the transmission channel, and circuitry **104, 106** to combine the perturbation terms with soft data symbols obtained from an input signal stream (FIG. 8). The computation of the perturbation terms involves circuitry **108, 110** for converting an input stream of soft data symbols to an input stream of hard data symbols, and then operating on the input stream of hard data symbols according to a model of nonlinear effects in the transmission channel.

FIG.   8

**Description**

**Field of the Invention**

The invention relates to devices and methods for use in coherent optical communication.

**Art Background**

This section introduces aspects that may help facilitate a better understanding of the inventions. Accordingly, the statements of this section are to be read in that light, and they should not be understood as admissions about what is prior art or what is not prior art.

In optical fiber communication systems, linear and nonlinear optical effects can degrade the optical signals and thereby limit system performance. Some optical fiber communication systems use digital signal processors (DSPs) to at least partially compensate for signal degradation that is due to linear impairments of the optical channel.

Digital compensation of signal degradation that arises from nonlinear optical effects, particularly from fiber nonlinearities, may also be useful for improving the performance of an optical fiber communication system. One potential benefit of fiber nonlinearity compensation (NLC) is that in an optical fiber communication system, such compensation could diminish the need for optical signal regeneration between a source optical data transmitter and a target optical data receiver.

Several techniques of digital compensation have been proposed to minimize or mitigate channel nonlinearities. It has been challenging for developers in this field to overcome the computational complexity of this problem. In the past few years, many algorithms have been proposed with the goal of minimizing the number of signal processing operations needed to equalize nonlinearity from the received signal. Some of these algorithms have substantially reduced the computational complexity.

One approach that shows promise for practical implementation in a coherent optical data receiver is the Perturbation-based Nonlinearity Compensator (PNC). Implementations of this approach involve calculating perturbation terms associated with intra-channel fiber nonlinearities and then subtracting them from the received signal.

For example, an efficient implementation of PNC was proposed in European Patent Application No. 15306613.9, published April 19, 2017 as EP 3,157,180 A1. The entirety of EP 3,157,180 A1 is hereby incorporated herein by reference. As proposed there, the nonlinear channel response is computed using a combination of linear filters operating over a number of interacting symbols.

Another implementation of PNC was proposed in U.S. Patent Serial No. 10,756,822, issued August 25, 2020. The entirety of U.S. Patent 10,756,822 is hereby incorporated herein by reference. The approach proposed there is based on a recognition that some contributions to the nonlinear optical effects have a much lower frequency content than the digital data symbol rate. For those contributions, low-frequency approximations are used to reduce the overall complexity of the computation.

Despite significant advances, however, PNC may still be unduly complex for implementation in the DSPs of at least some coherent optical fiber communication systems. Thus, there is still a need for even simpler circuits that can be implemented in an ASIC for a practical high-speed DSP.

**Summary of the Invention**

We have developed a new scheme for implementing PNC in a coherent optical fiber communication system. Our new scheme, which we refer to as "Hard-Decision PNC", is based on the processing of hard symbols after decision instead of the processing of received soft symbols. Thanks to this innovation, the computational cost of calculating the nonlinear perturbations in the PNC can be significantly reduced. There may be a small performance penalty due to decision errors, depending on the particular application scenario. However, this penalty can be overcome by performing Hard-Decision PNC in multiple stages, in which the decision on the symbols is taken at the beginning of each stage. The reliability of the decisions can gradually improve, stage-by-stage.

More specifically, possible corruptions in data symbols received on an input stream are corrected in PNC by additively combining the received data symbols with perturbation terms. The perturbation terms are computed from the received input stream together with system parameters. In known implementations, the corrections are performed on soft symbols, using perturbation terms that are also computed from the soft symbols that have been received.

In this regard, a "soft symbol" is a point in the complex plane that corresponds to a constellation symbol as received from the incoming optical channel after linear equalization. As such it is may be affected by noise, and may consequently deviate from the precise point in the complex plane where the original constellation symbol is located.

A soft symbol may be corrupted, because it bears the effects of fiber nonlinearity and noise, among other factors. Consequently, a soft symbol will not generally coincide precisely in value with a symbol from the constellation used for transmission.

The mapping of a soft symbol to a constellation symbol, resulting in the output of a "hard symbol", is performed by a hard decision processor. The range of possible values for a soft symbol is much greater than the range for hard symbols, which is limited to the discrete constellation points. In general, therefore, it takes significantly more bits to represent a soft symbol with sufficient precision than it does to represent a hard symbol.

In our new scheme, the perturbation terms are computed from hard symbols, rather than soft symbols. Because it takes fewer bits to represent a hard symbol, we are able to reduce the complexity of the computation.

As noted above, a hard decision implemented prior to computing the perturbation terms can possibly introduce decision errors that can degrade the performance of the receiver. As also noted above, we believe that a multistage approach can overcome this drawback. In the first stage of the multistage approach, the incoming soft symbols are subjected to a hard decision, perturbation terms are computed from the resulting hard symbols and from a first subset of nonlinearity contributions, and the computed perturbation terms are used to compute new soft symbols.

In each succeeding stage, a new set of perturbation terms are computed as above, but using a subset of nonlinearity contributions that is independent of the subsets used in the preceding stage or stages. By "independent" subsets, we mean subsets that have no elements in common. The perturbation calculation becomes progressively more refined as it advances through the multiple stages.

Accordingly, the disclosure relates in one aspect to a method that may be carried out in each of one or more stages in a digital signal processor for a coherent optical receiver. The method comprises obtaining an input stream of soft data symbols, generating a stream of perturbation terms that are representative of optical nonlinearity of an optical transmission channel, and using the perturbation terms to compensate respective ones of the soft data symbols in the input stream of soft data symbols for the optical nonlinearity.

For generating of the stream of perturbation terms, the input stream of soft data symbols is converted to an input stream of hard data symbols, and the method operates on the input stream of hard data symbols to produce the perturbation terms. The operating on the input stream of hard data symbols comprises forming weight coefficients. For each of the perturbation terms, the operating on the input stream of hard data symbols also comprises forming a weighted sum of the hard data symbols using the weight coefficients.

The input stream of soft data symbols of a first of the one or more stages is produced from a stream of measurements of an optical signal received by the optical receiver.

In embodiments, the using of the perturbation terms for compensation may comprise subtracting the perturbation terms from respective ones of the soft data symbols to generate the compensated ones of the soft data symbols.

In embodiments, the method may be performed in a series of the stages. In each stage after the first of the series, the obtaining of an input stream of soft data symbols comprises obtaining the compensated soft data symbols generated by the preceding stage of the series.

In embodiments further to any of those described above, each weight coefficient may be formed, at least in part, by performing a convolution between a set of channel coefficients and a set of multiplicative products of hard data symbols, wherein the channel coefficients are complex numbers that characterize nonlinear effects in the optical transmission channel. Each respective convolution may be performed numerically in the time domain. Alternatively, each convolution may correspond to a respective linear filter, and each respective convolution may be performed numerically by evaluating the corresponding linear filter in the frequency domain.

In embodiments further to any of those described above, the method may be performed in a series of two or more stages. In each stage, in generating each perturbation term, there is formed a weighted sum of a set of N terms from the input stream of hard data symbols respective to that stage, N being a predetermined positive integer. The respective sets of N terms used in the different stages are independent of each other.

In embodiments further to any of those described above, an ultimate of the one or more stages may direct a stream of the compensated soft data symbols to a decoder, and the directed stream is decoded in the decoder.

In embodiments, the using of the perturbation terms to compensate soft data symbols may comprise advancing at least some of the perturbation terms to a soft-decision FEC decoder; and in the FEC decoder, using the advanced perturbation terms to perform soft-decision compensation of at least some of the soft data symbols.

The disclosure relates in a second aspect to an apparatus comprising a digital signal processor that comprises one or more PNC stages to perform perturbation-based optical nonlinearity compensation of measurements of an optical data signal in an optical receiver. Each PNC stage comprises a circuit configured to convert a stream of soft data symbols to a stream of hard data symbols. Each PNC stage further comprises a PNC circuit configured to generate a stream of perturbation terms from the hard data symbols. Each PNC circuit is configured to generate each individual one of the perturbation terms as a weighted sum of the hard data symbols. The digital signal processor further comprises at least one circuit configured to compensate individual ones of the soft data symbols using corresponding ones of the perturbation terms.

In embodiments, the digital signal processor may comprise a series of the PNC stages, each of which is configured to subtract individual perturbation terms from respective soft data symbols to generate corrected soft data symbols. The PNC circuit in each PNC stage except a last PNC stage of the series is configured to output the corrected soft data symbols therefrom to a next PNC stage of the series. The PNC circuit of the last PNC stage of the series is configured to output the corrected soft data symbols therefrom to a decoder.

In embodiments of the apparatus further to any of those described above, the PNC circuit in each PNC stage may be conformed to perform a convolution between a set of channel coefficients and a set of multiplicative products of hard data symbols to generate weight coefficients, wherein the channel coefficients represent nonlinear effects in the optical transmission channel. In some embodiments, the PNC circuit in each PNC stage may be conformed to perform the convolution numerically by evaluating a corresponding linear filter in the frequency domain.

In embodiments of the apparatus further to any of those described above, the digital signal processor may comprise a series of two or more of the PNC stages. The PNC circuit in each PNC stage is configured to form each of its respective weighted sums from a set of N terms selected from a stream of hard data symbols, N being a predetermined positive integer, wherein the sets of N terms used by the respective PNC stages are independent of each other.

In embodiments, the digital signal processor may further comprise a soft-decision FEC decoder. The PNC circuit of a last of the one or more PNC stages is configured to output a stream of soft data symbols and a stream of perturbation terms to the soft-decision FEC decoder. The soft-decision FEC decoder is configured to use the outputted perturbation terms to perform_soft-decision compensation of the outputted soft data symbols.

## Brief Description of the Drawings

FIG. 1 schematically illustrates an optical fiber communication system.

FIG. 2 is a block diagram illustrating a coherent optical data transmitter that digitally implements some pre-compensation of nonlinear optical effects in a DSP thereof.

FIG. 3 is a block diagram illustrating a coherent optical data receiver that digitally implements some post-compensation of nonlinear optical effects in a DSP thereof.

FIG. 4 is a block diagram of a PNC equalizer circuit that, by operating on input signal streams, can perform nonlinear processing to produce streams of perturbation terms, correct symbol components of the input signal streams by combining them with respective perturbation terms, and output corrected signal streams.

FIG. 5 is a simplified block diagram of PNC implementation with FFT processing according to principles described here.

FIG. 6 is a simplified block diagram of an architecture for PNC equalization with reduced computational complexity.

FIG. 7 is a simplified block diagram of a scheme for soft-decision PNC according to principles that are described here.

FIG. 8 is a simplified block diagram of a new scheme for hard-decision PNC according to principles that are described here.

FIG. 9 is a simplified block diagram of a scheme for hard-decision PNC in a multistage implementation according to principles described here.

FIG. 10 is a block diagram in which an architecture for a coherent optical receiver is represented as an optical front end and a DSP chain.

FIG. 11 is a simplified block diagram of an example scheme for soft-decision compensation according to principles described herein.

FIG. 12 is a simplified block diagram of an optical receiver architecture, in which processing of multiple wavelength channels is illustrated.

FIG. 13 summarizes, in a flowchart, a method according to some of the principles described here.

FIG. 14 summarizes, in a flowchart, an alternative method according to some of the principles described here.

## Detailed Description

This Detailed Description and its accompanying drawings are intended merely to illustrate principles of the inventions. Based on the present specification, those of ordinary skill in the relevant art will be able to devise various arrangements that, although not explicitly described or shown herein, embody the inventions and are included within the scope of the claims. Also, statements herein reciting principles, aspects, and embodiments are intended to encompass equivalents thereof.

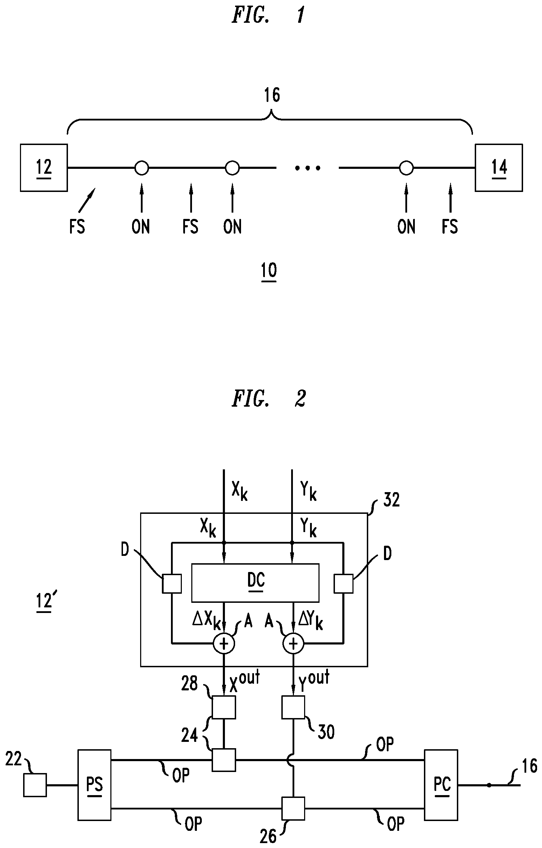

FIG. 1 illustrates an optical fiber communication system **10**, which includes an optical data transmitter **12**, an optical data receiver **14**, and an optical fiber line **16**. The optical fiber line **16** forms an all-optical communication channel between the optical data transmitter **12** and the optical data receiver **14**. The optical fiber line **16** has one or more optical fiber spans, exemplarily single-mode optical fiber spans (FS) as indicated in the figure, which are all-optically connected at optical nodes (ON). Optical data transmitter **12**, or optical data receiver **14**, or each of transmitter **12** and receiver **14** includes a digital signal processor (DSP), which is configured to evaluate corrections to the transmitted optical signals and, at least in part, to digitally correct for intra-channel and/or inter channel signal degradations due to nonlinear optical effects in the optical fiber line **16.**

FIG. 2 illustrates an example embodiment **12**' of the optical data transmitter **12** of FIG. 1. As illustrated, transmitter **12**' is configured to impose respective data modulations onto each of two orthogonal polarizations of an optical carrier, which are conventionally referred to as x-polarization and y-polarization, respectively. Transmitter **12**' may also, at least in part, digitally pre-compensate the optical signal for nonlinear optical effects arising, e.g., in the optical fiber line **16** of FIG. 1.

Optical data transmitter **12**' may transmit independent signals on each of a multiplicity of optical carriers having different wavelengths. In other words, optical data transmitter **12**' may transmit in multiple wavelength channels. For simplicity of presentation, however, optical data transmitter **12**' is described here without explicit reference to more than a single wavelength channel.

As illustrated, optical data transmitter **12**' includes optical source **22**; first and second optical data modulators **24**, **26**, respectively; electrical drivers **28**, **30** for the optical data modulators **24**, **26**; and digital signal processor (DSP) **32**.

Optical source **22** will typically be a narrow-bandwidth telecommunication laser. As illustrated, an optical wavelength carrier from optical source **22** is directed as input to optical polarization splitter PS. The two outputs of splitter PS, which have mutually orthogonal polarizations, are input by way of optical paths OP to respective optical data modulators **24**, **26**.

Each optical data modulator **24**, **26** optically modulates a digital data stream onto its respective polarization component of the optical wavelength carrier. The optical outputs of optical data modulators **24**, **26** connect to optical inputs of polarization combiner PC via optical paths OP. Polarization combiner PC has an optical output that connects to the near end of optical fiber line **16**. The modulated optical signals from modulators **24**, **26** are injected into the near end of optical fiber line **16** and carried over it by the respective orthogonal polarization states of the optical wavelength carrier.

Each electrical driver **28**, **30** receives digital control signals from DSP **32** and, in response, it outputs respective analog voltage-drive signals to operate optical data modulators **24**, **26**. More specifically, each electrical driver **28**, **30** receives a respective series of digital control signals $X_k^{out}, X_{k+1}^{out}, ...,$ or $Y_k^{out}, Y_{k+1}^{out}, ...,$ from DSP **32** and converts it to analog voltage-drive-signals, typically at radio frequency, for operating a corresponding optical data modulators. The indices k, k+1, etc., identify the timeslots for discrete modulation pulses.

The x-series and y-series digital control signals control the modulation of the x and y polarization components of the optical carrier, respectively. In some implementations, the drive control signals may also provide for some pre-compensation of nonlinear optical effects and possibly for some pre-compensation of dispersion in the optical fiber line **16**.

As shown in the figure, DSP **32** receives, as input, a digital symbol stream $\{X_k\} = X_k, X_{k+1}$, etc. and a digital symbol stream $\{Y_k\} = Y_k, Y_{k+1}$, etc. DSP **32** processes these received digital symbol streams to generate the corresponding digital signals $X_k^{out}, X_{k+1}^{out}, ...,$ and $Y_k^{out}, Y_{k+1}^{out}, ...,$ respectively. The digital symbol streams $X_k, X_{k+1}$, etc. and $Y_k, Y_{k+1}$, etc. are generated by a digital modulator such as a QAM modulator, which is situated upstream of DSP **32** and is not shown in the figure.

The digital modulator produces the digital symbol streams by mapping input data, in the form of a binary bitstream, to symbols selected from a desired modulation constellation.

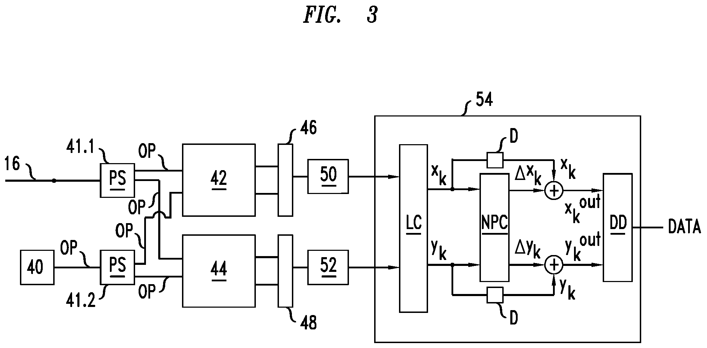

FIG. 3 illustrates an example embodiment **14**' of the optical data receiver **14** of FIG. 1, configured for use in a coherent optical fiber communication system. As will be explained below, optical data receiver **14**' digitally post-compensates, at least in part, for nonlinear optical effects that arise in the all-optical fiber line **16**.

Optical data receiver **14**' may receive independent signals on each of a multiplicity of optical carriers having different wavelengths. In other words, optical data receiver **14**' may receive in multiple wavelength channels. For simplicity of presentation, however, optical data receiver **14**' is described here without explicit reference to more than a single wavelength channel.

As shown in the figure, optical data receiver **14**' includes a local optical oscillator **40**; first and second polarization splitters **41.1**, **41.2**, first and second optical mixers **42**, **44**; photodetector arrays **46**, **48**; two electrical hardware series **50**, **52**; and DSP **54**.

Local optical oscillator **40** is exemplarily a narrow bandwidth, telecommunication laser with a wavelength near the wavelength of the optical data transmitter **12** of FIG. 1 as would be suitable, for example, for intradyne coherent optical detection.

In the illustrated example, the optical signal received from the end of the optical fiber line **16** is directed to optical polarization splitter **41.1**, which resolves two orthogonal polarization components of the received light and transmits them over optical paths OP to respective optical inputs of first and second optical mixers **42**, **44**. The optical output from local oscillator **40** is directed over an optical path OP to optical polarization splitter **41.2**, which resolves two orthogonal polarization components of the light from local oscillator **40** and transmits them over optical paths OP to respective optical inputs of first and second optical mixers **42**, **44**. Thus, each of the optical mixers **42**, **44** receives a respective one of the orthogonal polarization components of an optical signal, i.e., the x-component or the y-component, from each of polarization splitters **41.1** and **41.2**.

Each of optical mixers **42**, **44** combines the light it receives from the optical input signal with the light it receives from the local optical oscillator to produce a respective one of two modulation components of the received optical input signal. By way of illustration, optical mixer **42** may, e.g., combine the x-components of the light it receives from the optical polarization splitters to provide, as output, an optical signal representing the in-phase (I) component of the received optical signal. Correspondingly, optical mixer **44** would combine the y-components of the light it receives from the optical polarization splitters to provide, as output, an optical signal representing the quadrature (Q) component of the received optical signal.

Each of optical mixers **42** and **44** has a pair of mutually phase-shifted optical outputs, as shown in FIG. 3. These phase shifts condition the output signals for coherent optical detection, according to principles well-known in the art.

Each pair of outputs from optical mixers **42** and **44** is directed to a respective photodetector array **46**, **48**. Each of photodetector arrays **46**, **48** is configured to generate an analog electrical signal indicative of, respectively, the I component or the Q component of the received optical signal, in response to the input that it receives from its respective optical mixer. According to typical practice in the art, the signal in the x-polarization channel corresponds to the I component, and the signal in the y-polarization channel corresponds to the Q component of the received optical signal.

In illustrative examples, each of the optical mixers **42**, **44** comprises a 90-degree optical hybrid, and each of the optical intensity photodetector arrays **46**, **48** comprises a balanced pair of photodiodes connected for differential detection of optical intensity.

In the example illustrated in FIG. 3, the electrical output from each photodetector array **46**, **48** is directed to a respective series **50**, **52** of electronic hardware components. As known in the art, each series **50**, **52** may include, e.g., an electronic amplifier, an electronic low-pass filter, and an analog-to-digital converter. Series **50** and series **52** process the photodetector output in the respective x-polarization and y-polarization channels according to known methods such as low-pass filtering. The processing in series **50** and series **52** includes analog-to-digital conversion (not shown explicitly in the figure), which results in a digital electrical signal output in each polarization channel.

The digital signal streams output from series **50** and series **52** are directed to digital signal processor (DSP) **54**.

DSP **54** digitally processes the x-channel and y-channel digital signal streams received from series **50** and series **52**, thereby to recover the data symbol streams transmitted by the optical data transmitter **12** of FIG. 1. In typical examples, as illustrated, e.g., in FIG. 3, DSP **54** includes a linear processing circuit (LC). The linear processing circuit may be used, for example, to at least partially compensate for signal degradation from such sources as chromatic dispersion, polarization dispersion, polarization rotation, and attenuation in optical fiber line **16.**

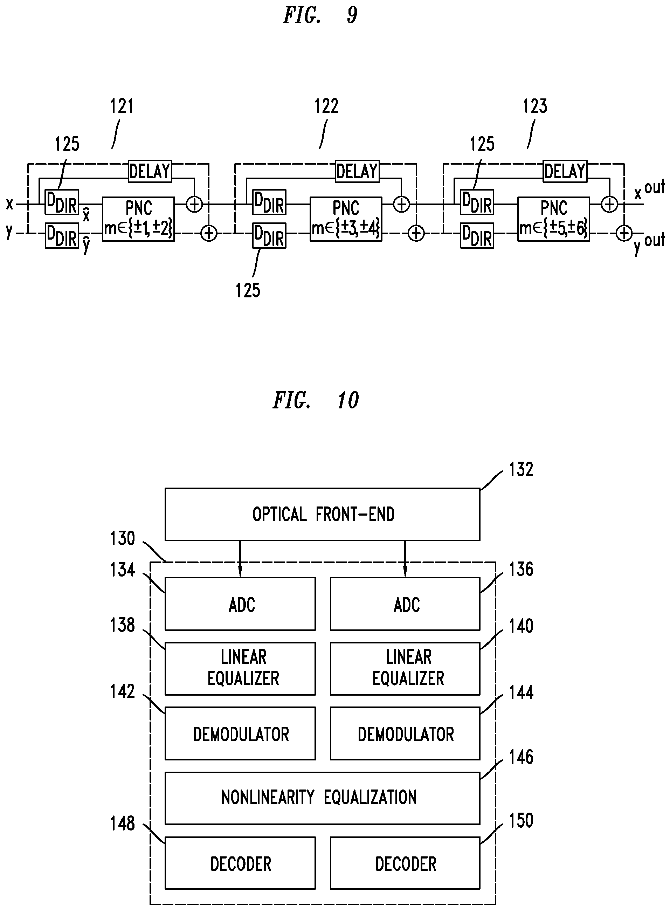

DSP **54** also typically includes circuitry to correct frequency offsets between the local optical oscillator **40** and the optical input signal received from optical fiber line **16.** Frequency-offset compensation is generally regarded as part of the linear processing. For that reason, the frequency-offset compensation has not been separately called out in FIG. 3, but should instead be understood as included within the operations performed by the linear processing circuit. (By contrast, linear processing is represented in FIG. 10, which is discussed below, by separate "linear equaliser" blocks and "demodulator" blocks. The demodulator blocks in FIG. 10 perform carrier-frequency recovery and carrier- phase recovery.)

The output of linear processing circuit LC consists, in the illustrated example, of digital signal stream $\{x_k\} = x_k$, $x_{k+1}$... in the x-channel and digital signal stream $\{y_k\} = y_k$, $y_{k+1}$... in the y-channel. The index "k" is the sequential label for a sampling timeslot.

Downstream of linear processing circuit LC, DSP 54 processes the digital signal streams $\{x_k\}$ and $\{y_k\}$ to produce digital signal streams $\{x_k^{out}\} = x_k^{out}, x_{k+1}^{out}, ...,$ and $\{y_k^{out}\} = y_k^{out}, y_{k+1}^{out}, ...$

The processing that produces signal streams $\{x_k^{out}\}$ and $\{y_k^{out}\}$ is carried out to at least partially compensate for signal degradation due to nonlinear optical effects in the optical fiber line **16** of FIG. 1.

More specifically, DSP **54** includes a nonlinear processing circuit NPC for processing of the digital signal streams $\{x_k\}$ and $\{y_k\}$. For each of these digital signal streams $\{x_k\}$ and $\{y_k\}$, the nonlinear processing circuit NPC outputs respective streams $\{\Delta x_k\} = \Delta x_k, \Delta x_{k+1}...$ and $\{\Delta y_k\} = \Delta y_k, \Delta y_{k+1}...$ of correction factors. DSP **54** also includes elements, as indicated in FIG. 3, that subtract the correction factors $\Delta x_k$, $\Delta y_k$ from their corresponding digital signal elements $x_k$, $y_k$, to produce the at least partially compensated digital data output signals $x_k^{out}$, $y_k^{out}$. As indicated in the figure, DSP **54** also includes delay elements D to correct for processing delay so that the signal streams $\{x_k\}$, $\{y_k\}$ are temporally aligned with

the correction streams $\{\Delta x_k\},\{\Delta y_k\}$ at the elements where the correction factors are subtracted.

As explained above, optical data transmitter **12** of FIG. 1 includes a digital modulator that produces digital symbol streams for transmission by mapping input data, in the form of a binary bitstream, to symbols selected from a desired modulation constellation. Turning back to FIG. 3, DSP **54** may include a processing stage that operates to recover the binary bitstream that was transmitted by optical data transmitter **12**.

More specifically, DSP **54** may include, for example, a conventional digital decoder DD that operates to recover the transmitted data symbols as a binary bitstream. The signal streams $\{x_k^{out}\}$ and $\{y_k^{out}\}$ that are input to digital decoder DD jointly constitute a representation of the transmitted stream of data symbols from a symbol constellation. In operation, the digital decoder DD performs an inverse mapping of these constellation symbols back to a binary bitstream, which is designated "DATA" in FIG. 3. The digital decoder DD may also provide for conventional error correction. For example, it may perform forward error correction (FEC) corresponding to FEC coding implemented in optical data transmitter **12** of FIG. 1.

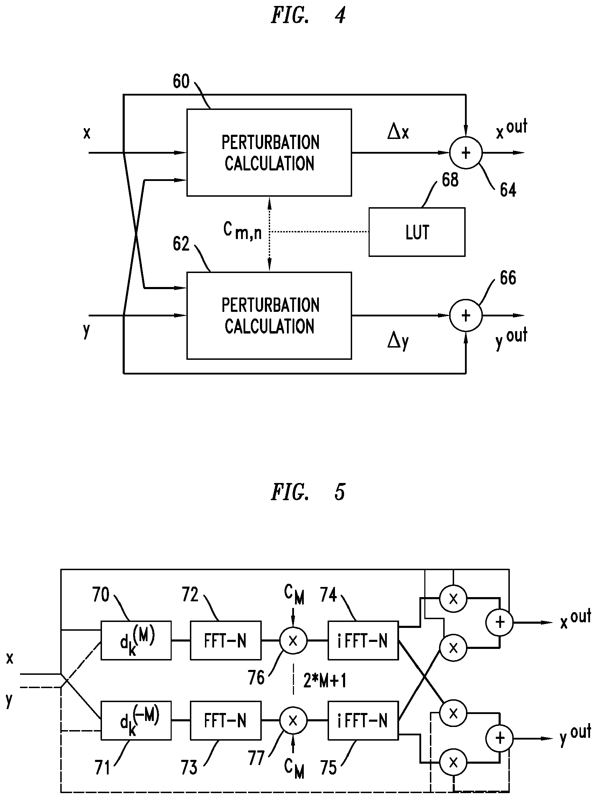

FIG. 4 is a block diagram of a PNC equalizer circuit that can perform nonlinear processing on input signal streams $\{x_k\}$ and $\{y_k\}$ to produce streams $\{\Delta x_k\}$ and $\{\Delta y_k\}$ of perturbation terms, correct each symbol component $x_k$ or $y_k$ by combining it with its respective perturbation term $\Delta x_k$ or $\Delta y_k$, and output the corrected signal streams $\{x_k^{out}\}$ and $\{y_k^{out}\}$.

Accordingly, FIG. 4 shows block **60** for the x-channel perturbation calculation that produces stream $\{\Delta x_k\}$, block **62** for the y-channel perturbation calculation that produces stream $\{\Delta x_k\}$, additive element **64** that subtracts each perturbation term $\Delta x_k$ from its corresponding symbol component $x_k$ to produce the corresponding corrected symbol component $x_k^{out}$ as output, and additive element **66** that subtracts each perturbation term $\Delta y_k$ from its corresponding symbol component $y_k$ to produce the corresponding corrected symbol component $y_k^{out}$ as output.

Although it has been omitted from the drawing to simplify the presentation, those skilled in the art will understand that the equalizer circuit of FIG. 4 also includes delay elements for the $\{x_k\}$ and $\{y_k\}$ streams so that the respective symbol components $x_k$ and $y_k$ are temporally aligned at the respective additive elements with their corresponding perturbation terms.

FIG. 4 also shows look-up table (LUT) **68**, which provides perturbation coefficients $C_{m,n}$ as inputs to the x-channel and y-channel perturbation calculations. The perturbation coefficients and their role in the perturbation calculation are defined in greater detail below. The perturbation coefficients depend on the link configuration. In examples, they can be calculated offline or, alternatively, estimated by means of a Least Mean Square (LMS) algorithm as reported, for example, in W. Peng et al, "Training-based Determination of Perturbation Coefficients for Fiber Nonlinearity Mitigation," 2015 Optical Fiber Communications Conference and Exhibition (OFC) (2015) 1-3.

Computations of the perturbation coefficients may be based, for example, on transmitter information, known *a priori,* of the channel chromatic dispersion, the fiber nonlinear coefficient, the inhomogeneous span length, and the random fiber launch power.

The values that are obtained for the perturbation coefficients may be stored quasistatically in LUT **68**.

By way of example, a useful calculation of the perturbation coefficients can be based on a channel model reported in R. Dar et al., "Inter-Channel Nonlinear Interference Noise in WDM Systems: Modeling and Mitigation," J. Lightwave Technol. 33 (2015)1044-1053. As reported there, a model of fiber nonlinearity assumes the temporal pulse matching condition as reported, e.g., in A. Ghazisaeidi and R. Essiambre, "Calculation of coefficients of perturbative nonlinear pre-compensation for Nyquist pulses," The European Conference on Optical Communication (ECOC), Cannes (2014) 1-3. Under those models, the perturbation coefficients can be calculated by:

$$C_{m,n} = -S_{m,n,m+n}$$

$$(1)$$

$$S_{m,n,l} = \int_0^L dz\, f(z) \int_{-\infty}^{+\infty} dt\, h^*(z, t) h(z, t - mT) h(z, t - nT) h^*(z, t - lT)$$

$$(2)$$

In the above expressions, the $S_{m,n,l}$ are complex coefficients, m, n, and l are discrete time indices, t is the (continuous) time variable, L is the total link length, the function f(z) accounts for the loss/gain profile of the fiber link, and h(z, t) is the pulse-shaping waveform propagated in the fiber up to the distance z.

A perturbation calculation that could be performed, for example, by the PNC circuit of FIG. 4 is given by:

$$\Delta x_k = \sum_{m=-M}^{M} \sum_{n=-N}^{N} C_{m,n}$$
$$\cdot \left( x_{k-m} x_{k-n} x_{k-m-n}^* + x_{k-m} y_{k-n} y_{k-m-n}^* \right) \qquad (3)$$

$$\Delta y_k = \sum_{m=-M}^{M} \sum_{n=-N}^{N} C_{m,n}$$
$$\cdot \left( y_{k-m} y_{k-n} y_{k-m-n}^* + y_{k-m} x_{k-n} x_{k-m-n}^* \right) \qquad (4)$$

The limits M and N of the summations in the above equations depend primarily on the signal-accumulated dispersion in the fiber link. As such, they are system parameters. For a given system scenario, there will generally be a most favorable pair of M and N values that optimizes the equalizer performance. These values have a broad range in practical applications, up to values on the order of 1000 or more, depending on the system architecture. Reducing the M and N values may simplify the circuit complexity, but such simplification could exact a cost in degraded equalizer performance.

Although the optimal values depend on the signal-accumulated dispersion, this relationship has not been suitably modeled as a closed-form expression, due to the complexity of modeling nonlinear behavior. Hence, the optimal values will generally be obtained by numerical simulation.

A computational approach that can reduce the complexity of the perturbation calculation is reported in the publication EP 3,157,180 A1, which was cited above. As explained there, Equations (3) and (4) can be rewritten such that the k'th perturbation term is expressed as a weighted sum of 2M+1 symbols $x_{k-m}$ or $y_{k-m}$, in which each of the weights is expressed as a convolution over the index n between perturbation coefficients $C_{m,n}$ and product terms $d_{k-n}^{(m)}$. The product terms are defined by:

$$d_{k-n}^{(m)} = \left( x_{k-n} x_{k-m-n}^* + y_{k-n} y_{k-m-n}^* \right) \cdot \qquad (5)$$

That is, by substituting the quantities $d_k^{(m)}$, the expressions for $x_k^{out}$ and $y_k^{out}$ can be rewritten as:

$$x_k^{out} = x_k + \sum_{m=-M}^{M} x_{k-m} \left[ \sum_{n=-N}^{N} C_{m,n} d_{k-n}^{(m)} \right] \qquad (6)$$

$$y_k^{out} = y_k + \sum_{m=-M}^{M} y_{k-m} \left[ \sum_{n=-N}^{N} C_{m,n} d_{k-n}^{(m)} \right], \qquad (7)$$

where each of the bracketed expressions represents 2M+1 convolutions.

Convolutions, as such, are evaluated in the discrete time domain. However, each of the convolutions in Equations (6) and (7) can be formulated, equivalently, as a linear filter to be evaluated in the frequency domain. The filter taps in the time domain are the coefficients $C_{m,n}$.

Conversion between the time and frequency domains is effectuated by using, e.g., the fast Fourier transform (FFT) and its inverse (IFFT). Computing the filtering in the frequency domain by Fast Fourier Transform (FFT), and then transforming back with Inverse Fast Fourier Transform (IFFT) is beneficial because it reduces the computational complexity to $\mathcal{O}(M \log N)$.

Accordingly, the running double-sum terms in Equations (6) and (7) can each be computed in the following three steps:

(i) Compute the products $d_k^{(m)}$;
(ii) Compute the output values of the bank of 2M+1 linear filters in parallel;
(iii) Compute the weighted sum of the filter outputs.

FIG. 5 is a simplified block diagram of PNC implementation with FFT processing. In the figure, blocks **70** and **71** compute the products $d_k^{(m)}$. Blocks **72** and **73** transform the problem into the frequency domain, where the convolution in the above bracketed expressions becomes a multiplicative product. Blocks **74** and **75** compute the IFFT. The multiplication with the perturbation coefficients $C_{m,n}$ is performed at multipliers **76** and **77** in the frequency domain.

In FIG. 5, the symbols Cm and $C_{-M}$, together with the legend 2*M+1 indicate that there is a bank of 2M+1 branches, only two of which are expressly drawn in the figure. For each index m = -M, . . ., 0, . . ., M, the full set of perturbation coefficients, or, equivalently, the full set of taps of the corresponding linear filter, is $C_m = \{C_{m,-N}, ..., C_{m,N}\}$.

Similarly, the symbols $d_k^{(M)}$ and $d_k^{(-M)}$ represent two of the 2M+1 sets of products $d_k^{(m)} = \{d_{k-N}^{(m)}, ..., d_{k+N}^{(m)}\}$.

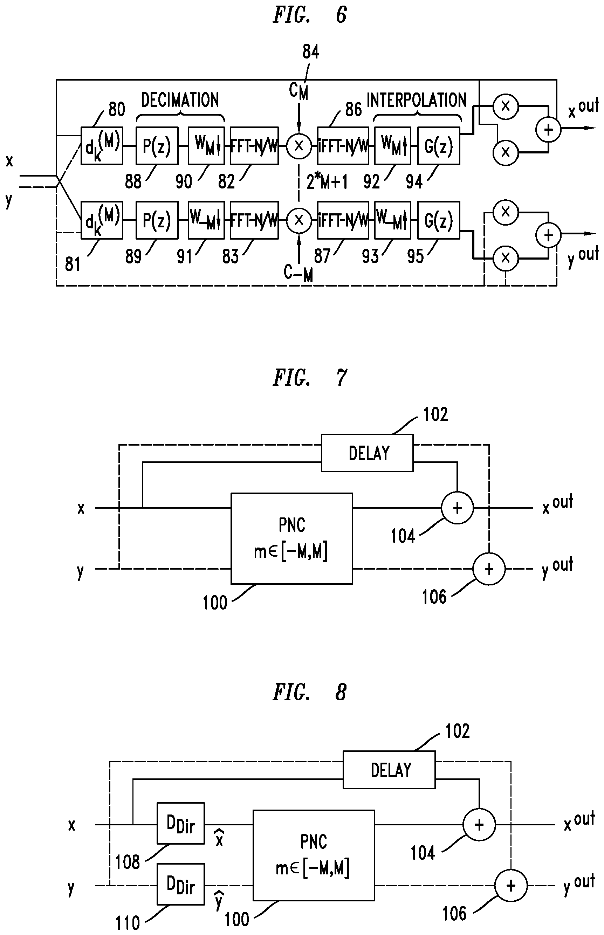

U.S. patent serial no. 10,756,822, which was cited above, reports an approach that can further reduce the computational complexity. FIG. 6 is a simplified block diagram of an architecture that can implement such an approach. As shown in the figure, the architecture includes a $d_k^{(m)}$ computation **80**, **81**, a FFT stage **82**, **83**, a multiplier stage **84**, and an IFFT stage **86**, **87**, as in FIG. 5. However, the $d_k^{(m)}$ terms are filtered **88**, **89** with a low-pass anti-aliasing digital filter P(z), and they are decimated **90**, **91** accordingly. These operations are equivalent to down-sampling. They reduce the size of the $d_k^{(m)}$ array to be computed, per symbol, to (2M + 1) · (2N + 1)/W, where W is the decimation factor, also referred to as the decimation rate. A decimation rate of 10 is illustrative, but other values are not excluded.

The bandwidth of the low-pass anti-aliasing filter P(z) is determined by the decimation rate. Different impulse responses can be adopted for the low-pass anti-aliasing filter. After the low-pass filtering, the $d_k^{(m)}$ terms are decimated in accordance with the decimation rate by selecting only one in every W samples.

The down-sampled set of $d_k^{(m)}$ terms are then filtered by the (2M + 1) parallel filters. The filtering step can be performed by FIR filters, or, as illustrated in FIG. 6, it can be performed in the frequency domain with FFT. Because of the downsampling, the filter tap size is (2N + 1)/W. The filter output terms are then up-sampled by interpolation **92**, **93** so that at the output stage where they are multiplied by the input $x_k$ and $y_k$ samples, they will have the same sampling rate as the input $x_k$ and $y_k$ samples. As shown in FIG. 6, the interpolation process includes blocks **94** and **95**, which represent a low-pass anti-imaging filter G(z), as is known in the art.

Perturbation terms may be computed by soft-decision PNC according to the following equations (8) and (9):

$$\Delta x_k^{(soft)}$$

$$= \sum_{m=-M}^{M} \sum_{n=-N}^{N} C_{m,n} \cdot (x_{k-m}x_{k-n}x_{k-m-n}^* + x_{k-m}y_{k-n}y_{k-m-n}^*) \qquad (8)$$

$$\Delta y_k^{(soft)} = \sum_{m=-M}^{M} \sum_{n=-N}^{N} C_{m,n} \cdot (y_{k-m}y_{k-n}y_{k-m-n}^* + y_{k-m}x_{k-n}x_{k-m-n}^*) \qquad (9)$$

Equations (8) and (9) are identical to Equations (3) and (4), except that the computed perturbation terms are marked with the superscript "soft" to emphasize that these terms have been computed from received input symbols that are soft symbols.

FIG. 7 is a simplified block diagram of the soft-decision PNC scheme. The corrected symbols are computed at the PNC block **100**. To simplify the figure, it has been made implicit that the summations over n in Equations (8) and (9) are subsumed into 2M+1 computational branches, each having an index m, and the legend "m $\in$[-M, M]" indicates that m takes the values -M, ..., 0, ..., M. As shown in the figure, the soft symbols $x_k$ and $y_k$ take two paths. In the upper path, the soft symbols are delayed **102**. In the lower path, the soft symbols pass through the PNC block **100**, which outputs the perturbation terms. The perturbation terms are added **104**, **106** to the delayed soft symbols $x_k$ and $y_k$.

As pointed out above, the evaluation of the perturbation terms according to the method of FIG. 7 is computationally expensive, not least because the multiplicative products of the form $x_{k-m}x_{k-n}x_{k-m-n}^*$, $x_{k-m}y_{k-n}y_{k-m-n}^*$, $y_{k-m}y_{k-n}y_{k-m-n}^*$, and $y_{k-m}x_{k-n}x_{k-m-n}^*$ in Equations (8) and (9) involve plural multiplications among complex-valued soft symbols.

Under our new hard-decision PNC scheme, the perturbation terms are evaluated according to:

$$\Delta x_k^{(hard)} = \sum_{m=-M}^{M} \sum_{n=-N}^{N} C_{m,n} \cdot (\hat{x}_{k-m}\hat{x}_{k-n}\hat{x}_{k-m-n}^* + \hat{x}_{k-m}\hat{y}_{k-n}\hat{y}_{k-m-n}^*) \qquad (10)$$

$$\Delta y_k^{(hard)} = \sum_{m=-M}^{M} \sum_{n=-N}^{N} C_{m,n} \cdot (\hat{y}_{k-m}\hat{y}_{k-n}\hat{y}_{k-m-n}^* + \hat{y}_{k-m}\hat{x}_{k-n}\hat{x}_{k-m-n}^*). \qquad (11)$$

Equations (10) and (11) are similar in form to Equations (8) and (9). However, the perturbation terms are marked with the superscript "hard" to emphasize that they are computed from hard, rather than soft, symbols. Likewise, the $x_k$ and $y_k$ terms in Equations (10) and (11) are marked with a circumflex to emphasize that they are hard, rather than soft, symbols.

FIG. 8 is a simplified block diagram of our new hard-decision PNC scheme. Elements that FIG. 8 has in common with FIG. 7 are called out with like reference numerals. The architecture of FIG. 8 is similar to the architecture of FIG. 7, except that the inputs to the PNC block **100** are now hard symbols. More specifically, the incoming soft symbols $x_k$ and $y_k$ take two paths. In the upper path, the soft symbols are delayed **102**. In the lower path, the soft symbols pass through respective decision-directed ($D_{Dir}$) blocks **108, 110,** where the hard decision is implemented. The outputs from the Doir blocks are the hard symbols $\hat{x}_k$ and $\hat{y}_k$, which are fed as input to the PNC block **100**. Thus, $D_{Dir}$ is a symbol-to-symbol mapping of the received, soft symbol to a constellation point in a hard-decision operation according, e.g., to a maximum *a posteriori* (MAP) detection.

Once the perturbation has been computed using the hard symbols, it is added **104, 106** to the delayed soft symbols $x_k$ and $y_k$.

The hard-decision PNC scheme of FIG. 8 has a single PNC stage. Although such a single-stage scheme offers a beneficial reduction in computational complexity, it also has the drawback that under at least some scenarios, it is subject to performance degradation because the hard decisions on the received symbols can introduce decision error.

However, we have developed a multistage scheme that may make the decisions more reliable. FIG. 9 is a simplified block diagram of our multistage hard-decision PNC scheme. As shown in the figure, the PNC computation is now divided into a plurality of serial stages **121, 122, 123,** each of which includes a hard-decision operation **125** on the soft symbols in each of the two polarization channels.

In each stage, a different nonlinear contribution is evaluated and applied to the incoming signal. What we mean by "nonlinear contribution" is best understood by referring back to FIG. 5, which shows an example in which the perturbation terms are computed in 2M+1 computational branches, each indexed by a respective value of the index m. Each of these 2M+1 computational branches provides a respective "nonlinear contribution".

Turning back to FIG. 9, it should be noted that each PNC stage in FIG. 9 computes the perturbation terms by implementing only a selected few, but not all, of the 2M+1 computations branches.

In each stage of the multistage scheme, the index m that identifies the selected branches can take on only a subset of all the possible values from -M to M. Each stage implements a subset that is independent of the subsets implemented by the other stages, i.e., no two of these subsets have any elements in common. By way of illustration, FIG 9 provides a nonlimiting example in which for the first stage, m takes the values -2, -1, 12, for the second stage, m takes the values -4, -3, 3, 4, and for the third stage, m takes the values -6, -5, 5, 6. A serial scheme of this kind is feasible because each nonlinear contribution is independent of the others.

Although FIG. 9 provides an example in which there are three stages, this number should not be understood as limiting. In particular embodiments, there may be as few as two stages, or even a single stage, whereas in other embodiments the number of stages may be greater than three.

After each PNC stage, the soft symbols are updated by summing them with the new values of the perturbation coefficients. After each update, the updated symbols in each polarization channel go forward on an upper branch to the next update, and on a lower branch to the hard decision that precedes the next PNC stage. In this manner, the effective signal-to-noise ratio (SNR) of the signal may be improved stage-by-stage. As a consequence, the hard decisions that precede the respective stages may become progressively more reliable, which could reduce the overall decision error relative to Hard-Decision PNC with a single stage.

An example embodiment of an optical data receiver was discussed above, with reference to FIG. 3. Turning back to FIG. 3, it will be seen that the illustrated optical data receiver **14'** includes a local optical oscillator **40**; first and second polarization splitters **41.1**, **41.2**, first and second optical mixers **42**, **44**; photodetector arrays **46**, **48**; two electrical hardware series **50**, **52**; and DSP **54**. One of the two photodetector arrays produces electrical output in the x-polarization channel, and the other photodetector array produces electrical output in the y-polarization channel.

It will also be seen that the electrical output from each photodetector array **46**, **48** is directed to a respective series **50**, **52** of electronic hardware components, in which each series includes, e.g., an electronic amplifier, an electronic low-pass filter, and an analog-to-digital converter (ADC). There is ADC output in each of the two polarization channels.

As illustrated in FIG. 3, the ADC outputs in the respective polarization channels (shown in the figure as the respective outputs of series **50** and series **52**) are directed to digital signal processor (DSP) **54**.

With further reference to FIG. 3, DSP **54** is seen to include a linear processing circuit (LC), a nonlinear processing circuit NPC that computes the perturbation terms, elements that combine the perturbation terms with their corresponding symbols from the received signal, and a processing stage such as the digital decoder DD that is shown in the figure.

The various processing stages illustrated in FIG. 3 that can be performed by a digital signal processor (DSP) may, in an alternative graphical presentation, be shown as elements of a DSP chain. FIG. 10 is a block diagram in which the architecture of FIG. 3 is represented, in part, as a DSP chain **130**.

In FIG. 10, optical front end **132** includes the local optical oscillator, polarization splitters, optical mixers, and photodetector arrays of FIG. 3. Optical front end **132** also includes part of each electrical hardware series of FIG. 3. In FIG. 10, however, the ADC functionality has been broken out from the optical front end, and instead, it has been shown as a front part of the DSP chain **132**. Accordingly, the ADC functionality is represented in FIG. 10 by ADC **134** for one of the two polarization channels and ADC **136** for the other of the two polarization channels.

With further reference to FIG. 10, DSP chain **130** is seen to include linear equalizer blocks **138** and **140** for the respective polarization channels. These blocks correspond to the linear processing circuit (LC) of FIG. 3. Demodulator blocks **142** and **144** follow the linear equalizer blocks. These demodulators, which in FIG. 3 were implicit in the linear circuit LC, perform carrier frequency recovery and carrier phase recovery for computing the soft symbols $x_k$, $y_k$ from the ADC output after linear equalization.

Nonlinearity Equalization block **146** of FIG. 10 corresponds to the nonlinear processing circuit NPC of FIG. 3, and Decoder blocks **148** and **150** of FIG. 10 correspond to the digital decoder DD shown in FIG. 3. By way of example, the decoder blocks **148** and **150** could implement FEC decoding.

With further reference to FIG. 10, the equalizer for Hard-Decision NPC is preferably placed, as shown, after the linear equalization and signal demodulation. This provides a way to ensure that computation can be performed at a rate of one sample per symbol. Once computed, each perturbation term output by the nonlinearity equalizer can be directly subtracted from the corresponding symbol before FEC decoding. This sequence is referred to as "hard-decision compensation".

Alternatively, the perturbation terms can be included in the computation of the symbol Log-Likelihood Ratios (LLRs) required for soft-decision FEC decoding. This alternative sequence is referred to as "soft-decision compensation.

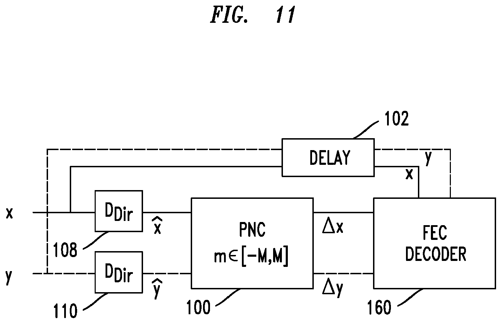

FIG. 11 is a simplified block diagram of an example scheme for soft-decision compensation. Drawing elements common to FIG. 8 and FIG. 11 are designated with like reference numerals. As shown in FIG. 11, the soft symbols $x_k$ and $y_k$, after the timing delay **102**, are passed forward to soft FEC decoder **160**. The outputs from PNC stage **100** are the perturbation terms $\Delta x_k$ and $\Delta y_k$, which are also passed forward to the soft FEC decoder.

As illustrated in FIG. 11, there is only a single PNC stage before the perturbation terms are passed forward to the soft FEC decoder for soft-decision compensation. If PNC is performed in multiple stages, the perturbation terms calculated in the last stage can be passed forward to the soft FEC decoder.

In either hard-decision compensation or soft-decision compensation, performing nonlinear compensation at the receiver side has the potential benefit that it can be implemented with an adaptive equalizer that estimates the $C_{m,n}$ coefficients by means of an LMS algorithm.

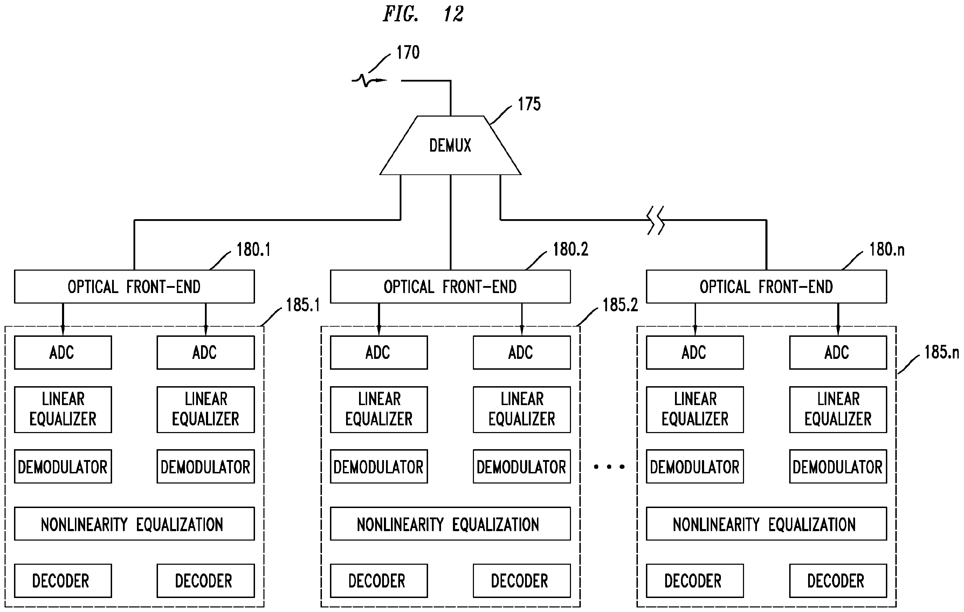

As noted above, an optical data receiver may receive independent signals on each of a multiplicity of optical carriers having different wavelengths. In other words, an optical data receiver may receive in multiple wavelength channels. For simplicity of presentation, however, the descriptions of an optical data receiver and the accompanying drawings do not make explicit reference to more than a single wavelength channel. FIG. 12 is a simplified block diagram of an optical receiver architecture, in which processing of multiple wavelength channels is illustrated. As shown in the drawing, the optical input signal **170** is wavelength demultiplexed at demultiplexer **175** into individual wavelength channels. The signal in each wavelength channel is directed to a respective optical front end **180.1**, **180.2**, ..., **180.n** and a respective DSP chain **185.1**, **185.2**, ..., **185.n**. Although omitted from the figure for simplicity of presentation, signals in multiple wavelength channels could be routed to each DSP chain to facilitate correction of interchannel interactions.

It is noteworthy that the techniques of Hard-Decision NPC described here can be applied to any standard modulation format for optical fiber transmission systems without introducing additive computational complexity.

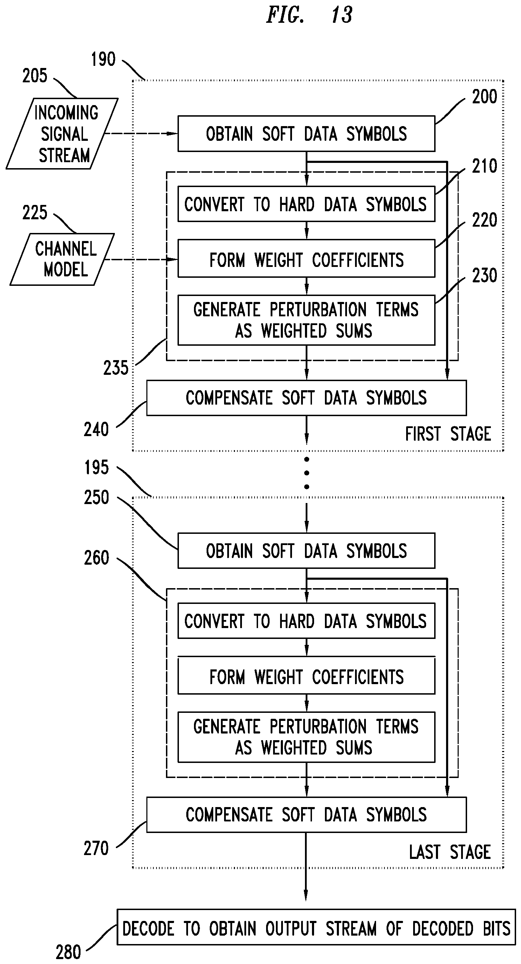

FIG. 13 summarizes, in a flowchart, a method according to some of the principles described here. The method is performed in one or more stages. In the figure, a first stage **190** and a last stage **195** are shown. Turning first to first stage **190**, soft data symbols are obtained at block **200** from incoming signal stream **205**. At block **210**, the soft data symbols are converted to hard symbols. At block **220**, weight coefficients are formed, using data from channel model **225**. At block **230**, the weight coefficients are used to generate perturbation terms as weighted sums. Blocks **210**, **220**, and **230** jointly constitute an operation **235** of providing the perturbation terms. At block **240**, the perturbation terms are used to compensate the soft data symbols, thereby to provide compensated soft data symbols, which may be output to a decoder in a single-stage approach or, as shown in FIG. 13, passed forward to a next stage in a multistage approach.

In the last stage **195** of a multistage approach, the most recently compensated soft data symbols are obtained, at block **250**, from the previous stage, and perturbation terms are provided in a block **260** similar to block **235** discussed above. At block **270**, a stream of compensated soft data symbols is generated and passed forward to decoder block **280** for decoding to an output stream of decoded bits.

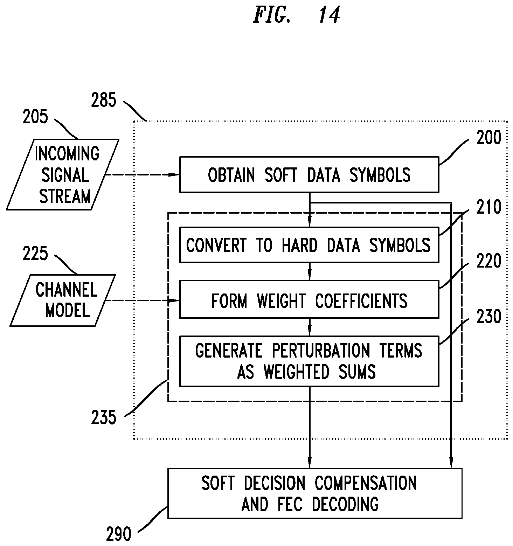

FIG. 14 summarizes, in a flowchart, an alternative method according to some of the principles described here. As illustrated, the method is performed with a single stage **285**, but the possibility of multi-stage implementations is not excluded.

Several of the blocks illustrated in FIG. 14 represent operations that are analogous to operations represented in corresponding blocks of FIG. 13 and, for that reason, are designated using like reference numeral.

Soft data symbols are obtained at block **200** from incoming signal stream **205**. At block **210**, the soft data symbols are converted to hard symbols. At block **220**, weight coefficients are formed, using data from channel model **225**. At block **230**, the weight coefficients are used to generate perturbation terms as weighted sums. Blocks **210**, **220**, and **230** jointly constitute an operation **235** of providing the perturbation terms.

In a departure from the method of FIG. 13, the perturbation terms and the soft data symbols are passed forward to decoder block **290** for soft decision compensation and FEC decoding.

**Claims**

1. A method, comprising, in each of one or more stages in a digital signal processor for a coherent optical receiver:

   obtaining (200) an input stream of soft data symbols;
   generating (235) a stream of perturbation terms that are representative of optical nonlinearity of an optical transmission channel; and
   using (240, 290) the perturbation terms to compensate respective ones of the soft data symbols in the input stream of soft data symbols for the optical nonlinearity, wherein:

      the generating of the stream of perturbation terms comprises converting (210) the input stream of soft data symbols to an input stream of hard data symbols and operating on the input stream of hard data symbols to produce the perturbation terms;

the operating on the input stream of hard data symbols comprises forming (220) weight coefficients and forming (230), for each of the perturbation terms, a weighted sum of the hard data symbols using the weight coefficients; and

the digital signal processor is configured to produce the input stream of soft data symbols of a first of the one or more stages from a stream of measurements of an optical signal received by the optical receiver.

2. The method of claim 1, wherein the using of the perturbation terms to compensate respective ones of the soft data symbols comprises subtracting (240) the perturbation terms from respective ones of the said soft data symbols to generate the compensated ones of the soft data symbols.

3. The method of claim 2, performed in a series of the stages, wherein in each stage after the first of the series, the obtaining comprises obtaining (250) the compensated soft data symbols generated by the preceding one of the stages of the series.

4. The method of claim 3, wherein:

each said weight coefficient is formed, at least in part, by performing a convolution between a set of channel coefficients and a set of multiplicative products of hard data symbols; and

the channel coefficients are complex numbers that characterize nonlinear effects in the optical transmission channel.

5. The method of claim 4, wherein each respective convolution is performed numerically in the time domain.

6. The method of claim 4, wherein each convolution corresponds to a respective linear filter, and each respective convolution is performed numerically by evaluating the corresponding linear filter in the frequency domain.

7. The method of claim 4, wherein:

the series has two or more of the stages (190, 195); and

in each stage, the generating of each of the perturbation terms in a stream of perturbation terms comprises forming a weighted sum of a set of N terms from the input stream of hard data symbols respective to that stage, N being a predetermined positive integer; and

the respective sets of N terms used in the different stages are independent of each other.

8. The method of claim 2, wherein:

an ultimate of the one or more stages (195) directs a stream of the compensated soft data symbols to a decoder; and

the method further comprises, in the decoder, decoding (280) said directed stream.

9. The method of claim 1, wherein the using of the perturbation terms to compensate respective ones of the soft data symbols comprises:

advancing at least some of the perturbation terms to a soft-decision FEC decoder; and

in the FEC decoder, using the advanced at least some of the perturbation terms to perform soft-decision compensation (290) of at least some of the soft data symbols.

10. An apparatus, comprising:

a digital signal processor, comprising one or more PNC stages (121, 122, 123), to perform perturbation-based optical nonlinearity compensation of measurements of an optical data signal in an optical receiver, wherein each PNC stage comprises:

a circuit (108) configured to convert a stream of soft data symbols to a stream of hard data symbols; and

a PNC circuit (100) configured to generate a stream of perturbation terms from the hard data symbols, the PNC circuit (100) being configured to generate each individual one of the perturbation terms as a weighted sum of the hard data symbols; and

wherein the digital signal processor further comprises at least one circuit (104, 106) configured to compensate individual ones of the soft data symbols using corresponding ones of the perturbation terms.

**11.** The apparatus of claim 10, wherein:

the digital signal processor comprises a series of the PNC stages (121, 122, 123);

the PNC circuit in each PNC stage is configured to subtract individual ones of the perturbation terms from respective ones of the soft data symbols to generate corrected soft data symbols;

the PNC circuit in each PNC stage except a last PNC stage of the series is configured to output the corrected soft data symbols therefrom to a next PNC stage of the series; and

the PNC circuit of the last PNC stage (123) of the series is configured to output the corrected soft data symbols therefrom to a decoder (148, 150).

**12.** The apparatus of claim 11, wherein:

the PNC circuit in each PNC stage is conformed to perform a convolution between a set of channel coefficients and a set of multiplicative products of hard data symbols to generate weight coefficients; and

the channel coefficients represent nonlinear effects in the optical transmission channel.

**13.** The apparatus of claim 12, wherein the PNC circuit in each PNC stage is conformed to perform the convolution numerically by evaluating a corresponding linear filter in the frequency domain.

**14.** The apparatus of claim 12, wherein:

the series comprises two or more of the PNC stages; and

the PNC circuit in each PNC stage is configured to form each of its respective weighted sums from a set of N terms selected from a stream of hard data symbols, N being a predetermined positive integer; and

the sets of N terms used by the respective PNC stages are independent of each other.

**15.** The apparatus of claim 10, wherein:

the digital signal processor further comprises a soft-decision FEC decoder (160);

the PNC circuit of a last of the one or more PNC stages is configured to output a stream of soft data symbols and a stream of perturbation terms to the soft-decision FEC decoder (160); and

the soft-decision FEC decoder is configured to use the outputted perturbation terms to perform_soft-decision compensation of the outputted soft data symbols.

*FIG. 1*

16

12 ——○——○—— ··· ——○—— 14

FS    ON   FS   ON        ON   FS

10

*FIG. 2*

$X_k$      $Y_k$

$X_k$      $Y_k$        32

D                              D

DC

$\Delta X_k$   A   A   $\Delta Y_k$

12′

⊕        ⊕

28   $X^{out}$        $Y^{out}$   30

24

OP

22   PS        OP            OP   PC   16

OP        OP

26

15

FIG. 3

## FIG. 4

## FIG. 5

## FIG. 6

## FIG. 7

## FIG. 8

## FIG. 9

## FIG. 10

FIG. 11

*FIG.* 12

EP 4 407 895 A1

## FIG. 13

*205*
INCOMING SIGNAL STREAM

*190*

*200* OBTAIN SOFT DATA SYMBOLS

*210* CONVERT TO HARD DATA SYMBOLS

*225*
CHANNEL MODEL

*220* FORM WEIGHT COEFFICIENTS

*230* GENERATE PERTURBATION TERMS AS WEIGHTED SUMS

*235*

*240* COMPENSATE SOFT DATA SYMBOLS

FIRST STAGE

*195*
*250* OBTAIN SOFT DATA SYMBOLS

*260* CONVERT TO HARD DATA SYMBOLS

FORM WEIGHT COEFFICIENTS

GENERATE PERTURBATION TERMS AS WEIGHTED SUMS

*270* COMPENSATE SOFT DATA SYMBOLS

LAST STAGE

*280* DECODE TO OBTAIN OUTPUT STREAM OF DECODED BITS

## FIG. 14

205
INCOMING
SIGNAL
STREAM

285

200
OBTAIN SOFT DATA SYMBOLS

225
CHANNEL
MODEL

210
CONVERT TO HARD DATA SYMBOLS

220
FORM WEIGHT COEFFICIENTS

230
GENERATE PERTURBATION TERMS
AS WEIGHTED SUMS

235

290
SOFT DECISION COMPENSATION
AND FEC DECODING

Europäisches
Patentamt

European
Patent Office

Office européen
des brevets

# EUROPEAN SEARCH REPORT

Application Number

EP 23 15 3449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EDSON P DA SILVA ET AL: "Perturbation-based FEC-assisted Iterative Nonlinearity Compensation for WDM Systems", ARXIV.ORG, CORNELL UNIVERSITY LIBRARY, 201 OLIN LIBRARY CORNELL UNIVERSITY ITHACA, NY 14853, 4 October 2018 (2018-10-04), XP081057448, DOI: 10.1109/JLT.2018.2882638 | 1-8, 10-14 | INV. H04B10/61 |
| A | * the whole document * | 9,15 | |
| X | DA SILVA EDSON P ET AL: "FEC-assisted Nonlinearity Compensation for Coherent Optical Receivers", 2021 SBFOTON INTERNATIONAL OPTICS AND PHOTONICS CONFERENCE (SBFOTON IOPC), IEEE, 31 May 2021 (2021-05-31), pages 1-4, XP033937481, DOI: 10.1109/SBFOTONIOPC50774.2021.9461964 [retrieved on 2021-06-21] | 1-8, 10-14 | |
| A | * the whole document * | 9,15 | TECHNICAL FIELDS SEARCHED (IPC) |
| X | US 2015/071652 A1 (ZHUGE QUNBI [CA] ET AL) 12 March 2015 (2015-03-12) | 1-8, 10-14 | H04B |
| A | * paragraphs [0023] - [0027] * * paragraphs [0032] - [0034] * * figure 2B * | 9,15 | |
| X | EP 2 858 272 A1 (FUJITSU LTD [JP]) 8 April 2015 (2015-04-08) | 1-8, 10-14 | |
| A | * paragraphs [0010] - [0013] * * figures 5-7, 11 * | 9,15 | |

-/--

The present search report has been drawn up for all claims

| Place of search | Date of completion of the search | Examiner |
|---|---|---|
| Munich | 29 June 2023 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EUROPEAN SEARCH REPORT

Application Number

EP 23 15 3449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 434 668 A1 (FUJITSU LTD [JP]) 28 March 2012 (2012-03-28) | 1-8, 10-14 | |
| A | * paragraphs [0022] – [0025] * <br> * paragraphs [0043] – [0044] * <br> * paragraphs [0053] – [0059] * <br> * figures 2-6 * | 9,15 | |
| A,D | US 10 756 822 B1 (MARSELLA DOMENICO [IT] ET AL) 25 August 2020 (2020-08-25) <br> * the whole document * | 1-15 | |
| A,D | EP 3 157 180 A1 (ALCATEL LUCENT [FR]) 19 April 2017 (2017-04-19) <br> * the whole document * | 1-15 | |
| A | EP 3 352 387 A1 (ALCATEL LUCENT [FR]) 25 July 2018 (2018-07-25) <br> * the whole document * | 1-15 | |
| | | | TECHNICAL FIELDS SEARCHED (IPC) |

The present search report has been drawn up for all claims

| Place of search | Date of completion of the search | Examiner |
|---|---|---|
| Munich | 29 June 2023 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 15 3449

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2023

| Patent document cited in search report | | Publication date | Patent family member(s) | | Publication date |
|---|---|---|---|---|---|
| US 2015071652 | A1 | 12-03-2015 | US 2015071652 A1 | | 12-03-2015 |
|  |  |  | US 2016233963 A1 | | 11-08-2016 |
| EP 2858272 | A1 | 08-04-2015 | EP 2858272 A1 | | 08-04-2015 |
|  |  |  | JP 6135415 B2 | | 31-05-2017 |
|  |  |  | JP 2015056753 A | | 23-03-2015 |
|  |  |  | US 2015071630 A1 | | 12-03-2015 |
| EP 2434668 | A1 | 28-03-2012 | CN 102420660 A | | 18-04-2012 |
|  |  |  | EP 2434668 A1 | | 28-03-2012 |
|  |  |  | JP 5834668 B2 | | 24-12-2015 |
|  |  |  | JP 2012075097 A | | 12-04-2012 |
|  |  |  | US 2012076235 A1 | | 29-03-2012 |
| US 10756822 | B1 | 25-08-2020 | NONE | | |
| EP 3157180 | A1 | 19-04-2017 | NONE | | |
| EP 3352387 | A1 | 25-07-2018 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15306613 A
- EP 3157180 A1
- US 10756822 B

**Non-patent literature cited in the description**

- **W. PENG et al.** Training-based Determination of Perturbation Coefficients for Fiber Nonlinearity Mitigation. *2015 Optical Fiber Communications Conference and Exhibition (OFC),* 2015, 1-3
- **R. DAR et al.** Inter-Channel Nonlinear Interference Noise in WDM Systems: Modeling and Mitigation. *J. Lightwave Technol.,* 2015, vol. 33, 1044-1053
- **A. GHAZISAEIDI ; R. ESSIAMBRE.** Calculation of coefficients of perturbative nonlinear pre-compensation for Nyquist pulses. *The European Conference on Optical Communication (ECOC), Cannes,* 2014, 1-3